# EUROPEAN PATENT SPECIFICATION

(11) **EP 4 290 677 B1**
(45) Date of publication and mention of the grant of the patent: **21.01.2026**
(21) Application number: 22881316.8
(22) Date of filing: 11.10.2022
(51) Int. Cl.: H01M 50/578, H01M 50/557, H01M 50/533, H01M 50/178, H01M 50/105, H01M 50/121, H01M 50/186, H01M 50/193, H01M 50/534, H01M 50/55, H01M 50/553

(54) **SECONDARY BATTERY**
SEKUNDÄRBATTERIE
BATTERIE SECONDAIRE

(30) Priority: 12.10.2021 KR 20210135349
(43) Date of publication of application: 13.12.2023
(73) Proprietor: LG Energy Solution, Ltd., Seoul 07335 (KR)
(72) Inventor: KANG, Gyung-Soo, Daejeon 34122 (KR); SONG, Dae-Woong, Daejeon 34122 (KR); LEE, Jae-Ho, Daejeon 34122 (KR); HWANG, Ji-Young, Daejeon 34122 (KR)
(74) Representative: Plasseraud IP
(86) International application number: PCT/KR2022/015318
(87) International publication number: WO 2023/063689

(56) References cited:
- FR-A1- 3 056 024
- KR-A- 20150 034 637
- KR-A- 20160 131 415
- KR-A- 20180 129 217
- KR-A- 20180 130 892
- KR-B1- 102 056 363
- US-A1- 2013 236 752
- US-A1- 2017 117 515

## Description

### TECHNICAL FIELD

The present disclosure relates to a secondary battery, and more specifically, to a secondary battery having enhanced safety by improving the structure of an electrode lead.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such a secondary battery is attracting attention as a new energy source to improve eco-friendliness and energy efficiency in that it has not only a primary advantage of dramatically reducing the use of fossil fuels, but also no by-products generated from the use of energy.

In general, a secondary battery is composed of a positive electrode, a negative electrode, a separator separating them, an electrolyte delivering lithium ions through the separator, a case accommodating them, and an electrode lead becoming a path of a current out of the case. Typically, a lead film serves to seal the electrode lead and the case while preventing a short circuit between the electrode lead and the case by being bonded to such an electrode lead.

When the temperature inside the battery rises due to overcharging exceeding the permitted current or voltage, internal short circuit, or the like in such a secondary battery, the internal pressure increases due to vaporization of the electrolyte, and as a result, so-called swelling phenomenon in which the battery swells occurs. When the swelling phenomenon occurs, a short circuit may occur locally as the battery is deformed, and the battery may be ignited or explode in extreme situation.

Accordingly, when the swelling phenomenon occurs due to overcharging or the like, there is a need for development of a technology capable of fundamentally eliminating the risk caused by overcharging and greatly enhancing safety by limiting the flow of current.

Examples of background art can be found in US2017/117515A1.

### DISCLOSURE

### Technical Problem

The present disclosure is designed to solve the problems of the related art, and therefore the present disclosure is directed to providing a secondary battery that may secure safety by realizing a current blocking function according to an increase in internal pressure.

### Technical Solution

A secondary battery according to the independent claim 1 for solving the above-described problems includes an electrode assembly to which an electrode lead is attached; a case accommodating the electrode assembly therein so that a portion of the electrode lead is exposed to an outside of the case; a sealing portion formed in the case to seal the electrode assembly; and a lead film covering a portion of an outer surface of the electrode lead and interposed between the electrode lead and the sealing portion, wherein the electrode lead includes a first region not corresponding to the lead film and exposed to the outside of the case, a second region corresponding to the lead film, and a third region not corresponding to the lead film and not exposed to the outside of the case, wherein a separation groove is located in the third region. A separation groove is additionally located in the first region.

The separation groove located in the third region and the separation groove located in the first region may be respectively located on opposite surfaces of the electrode lead.

The separation groove may be formed in a band shape crossing the width of the electrode lead.

The separation groove may have a shape of a dotted line.

In this case, the width of the dotted line may be 5 to 50% of the width of the electrode lead.

The length between adjacent dots of the dotted line may be 5 to 50% of the width of the electrode lead.

The ratio of the width of the dotted line to the length between adjacent dots of the dotted line may be 5:1 to 1:5.

The cross section of the separation groove may have any one of a wedge shape, a round shape, and a square shape.

The separation groove may be filled with an insulating film.

The separation groove may be covered with an insulating film.

In this case, an empty space may exist inside the separation groove.

The insulating film may include polypropylene, polyethylene, polyimide, or two or more of these.

It is preferable that the lead film includes polyethylene.

The secondary battery may be a pouch-type secondary battery.

In the secondary battery according to the present disclosure, the third region may not correspond to the sealing portion, and the width of the lead film may be wider than the width of the sealing portion.

The separation groove may be formed to be connected from one end to the other end of the electrode lead along a direction orthogonal to the extension direction of the electrode lead.

The separation groove may be a region in which a portion of the thickness of the electrode lead is reduced along the width direction of the electrode lead.

The separation groove may be a trench recessed from the surface of the electrode lead in a thickness direction.

The separation groove may not be formed to be connected from one end to the other end of the electrode lead, but may be divided into several portions, and there may be no continuity between the separation grooves.

### Advantageous Effects

In the secondary battery according to an embodiment of the present disclosure, a separation groove is located on the electrode lead not corresponding to the lead film and not exposed to the outside of the case, and thus the electrode lead is rapidly broken when internal pressure of the battery increases, thereby securing safety.

The separation groove located on the electrode lead of the secondary battery according to the present disclosure may be designed to be broken when high temperature and high pressure are applied to the secondary battery. Accordingly, when the temperature of the secondary battery is runaway or the internal pressure of the secondary battery increases, the electrode lead may be cut at the separation groove. When the electrode lead is broken at the separation groove, the current path to the electrode assembly is completely blocked. Therefore, it is possible to help enhance battery safety by forcibly releasing the electrical connection structure.

In the secondary battery according to another embodiment of the present disclosure, the internal pressure at which the electrode lead is broken may be controlled by adjusting the location and number of the separation grooves. In particular, when two separation grooves are located on opposite surfaces of the electrode lead, a stronger magnitude of stress may be applied to the separation groove, and thus it may be easier for the electrode lead to be rapidly broken.

According to the present disclosure, there is an advantage in that a thermal safety device is provided even in a pouch-type secondary battery by placing the separation groove on the electrode lead and breaking the electrode lead at the separation groove to forcibly release the electrical connection. The pouch-type secondary battery does not have a PTC or CID that works during runaway of the cell temperature in the case of a cylindrical battery, but if the separation groove is formed on the electrode lead according to the present disclosure, it may be operated as a safety device when the cell temperature is runaway. Accordingly, it is possible to prepare for the risk of fire.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a secondary battery according to an embodiment of the present disclosure.
FIG. 2 is an enlarged plan view showing an electrode lead in a secondary battery according to an embodiment of the present disclosure.
FIG. 3 is an enlarged plan view showing an electrode lead in a secondary battery according to another embodiment of the present disclosure.
FIG. 4 is an enlarged perspective view showing an electrode lead in a secondary battery according to still another embodiment of the present disclosure.
FIG. 5 is an enlarged perspective view showing an electrode lead in a secondary battery according to still another embodiment of the present disclosure.
FIG. 6 is an enlarged exploded perspective view showing an electrode lead in a secondary battery according to still another embodiment of the present disclosure.
FIG. 7 is an enlarged exploded perspective view showing an electrode lead in a secondary battery according to another embodiment of the present disclosure.
FIGS. 8 to 12 are diagrams showing stress analysis results when internal pressure is applied to an electrode lead portion of a secondary battery according to Examples.
FIGS. 13 to 16 are diagrams showing stress analysis results when internal pressure is applied to an electrode lead portion of a secondary battery according to Comparative Examples.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, while the scope of the invention is defined by the appended claims.

A secondary battery according to one aspect of the present disclosure includes an electrode assembly to which an electrode lead is attached; a case accommodating the electrode assembly therein so that a portion of the electrode lead is exposed to an outside of the case; a sealing portion formed in the case to seal the electrode assembly; and a lead film covering a portion of an outer surface of the electrode lead and interposed between the electrode lead and the sealing portion, wherein the electrode lead includes a first region not corresponding to the lead film and exposed to the outside of the case, a second region corresponding to the lead film, and a third region not corresponding to the lead film and not exposed to the outside of the case, wherein a separation groove is located in the third region.

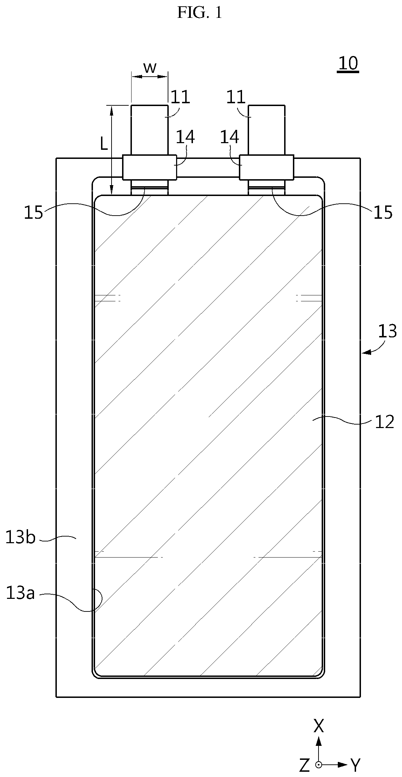

FIG. 1 is a plan view showing a secondary battery according to an embodiment of the present disclosure.

Referring to FIG. 1, a secondary battery 10 according to an embodiment of the present disclosure includes an electrode assembly 12 to which an electrode lead 11 is attached and a case 13.

The electrode assembly 12 includes a positive electrode plate, a negative electrode plate, and a separator. The electrode assembly 12 may be formed by sequentially stacking a positive electrode plate and a negative electrode plate with a separator interposed therebetween.

The positive electrode plate may be formed to include a positive electrode current collector made of a thin metal plate having excellent conductivity, for example, aluminum (Al) foil, and a positive electrode active material layer coated on at least one surface thereof. In addition, the positive electrode plate may include a positive electrode tab made of a metal material, such as aluminum material, at one end thereof. The positive electrode tab may extend and protrude from one end of the positive electrode plate, or may be welded to one end of the positive electrode plate or bonded using a conductive adhesive.

The negative electrode plate may include a negative electrode current collector made of a thin conductive metal plate, for example, copper (Cu) foil, and a negative electrode active material layer coated on at least one surface thereof. In addition, the negative electrode plate may include a negative electrode tab made of a metal material, such as copper or nickel (Ni) material, at one end thereof. The negative electrode tab may extend and protrude from one end of the negative electrode plate, or may be welded to one end of the negative electrode plate or bonded using a conductive adhesive.

The separator is interposed between the positive electrode plate and the negative electrode plate to electrically insulate the positive electrode plate and the negative electrode plate from each other, and may be formed in a porous membrane shape so that lithium ions may pass through each other between the positive electrode plate and the negative electrode plate. The separator may include a porous membrane using, for example, polyethylene (PE), polypropylene (PP), or a composite film thereof.

An inorganic coating layer may be provided on the surface of the separator. The inorganic coating layer may have a structure in which inorganic particles are bonded to each other by a binder to form an interstitial volume between the particles.

The electrode assembly 12 includes a jelly-roll (wound type) electrode assembly having a structure in which long sheet-shaped positive electrodes and negative electrodes are wound with a separator interposed therebetween, a stack-type (stacked) electrode assembly in which a plurality of positive electrodes and negative electrodes cut out in a predetermined size unit are sequentially stacked with a separator interposed therebetween, and a stack/folding type electrode assembly having a structure in which bi-cells or full cells where positive electrodes and negative electrodes in a predetermined unit are stacked with a separator interposed therebetween are wound.

The case 13 includes an accommodating portion 13a accommodating the electrode assembly 12, a sealant resin, and a sealing portion 13b formed to seal the electrode assembly 12.

The sealing portion 13b refers to a portion that is fused along the outer circumferential surface of the accommodating portion 13a to seal the electrode assembly 12, and the fusion may be thermal fusion, ultrasonic fusion, or the like, but is not particularly limited as long as the sealing portion may be fused.

In an embodiment of the present disclosure, the case 13 may be provided in the form of a film having a multilayer structure of an outer layer for external impact protection, a metal barrier layer for blocking moisture, and a sealant layer for sealing the case.

The outer layer may include polyester-based films such as polyethylene terephthalate (PET), polybutylene terephthalate, polyethylene naphthalate, polybutylene naphthalate, copolymerized polyester, polycarbonate, nylon, and the like, and may be composed of a single layer or multiple layers.

The metal barrier layer may include aluminum, copper, or the like.

The sealant layer may include a sealant resin and may be composed of a single layer or multiple layers.

The sealant resin may include polypropylene, acid modified polypropylene (PPa), random polypropylene, ethylene propylene copolymer, or two or more thereof. The ethylene propylene copolymer may include ethylene-propylene rubber, ethylene-propylene block copolymer, and the like, but is not limited thereto.

In an embodiment of the present disclosure, the case 13 may be in the form of a pouch.

In an embodiment of the present disclosure, when the case 13 is in the form of a pouch, it may include an upper pouch and a lower pouch. When the case 13 includes an upper pouch and a lower pouch, the outer circumferential surfaces of the upper pouch and the lower pouch may be fused to each other by heat and pressure, thereby sealing the battery.

When the case is in the form of a pouch, the sealing portion 13b may be sealed on four sides or three sides at the edge of the case 13. The three-sided sealing structure means a structure in which the edges of the remaining three sides except the bent portion are sealed in a state where the upper pouch and the lower pouch are formed into one pouch sheet and then the boundary surface of the upper pouch and the lower pouch is bent to overlap the accommodating portions 13a formed in the upper pouch and the lower pouch. FIG. 1 may be referred to as a view showing the accommodating portion 13a formed in the lower pouch before covering the upper pouch.

The electrode lead 11 serves as a current path and is made of a metal material. As for the material, all metals having conductivity may be used.

The electrode lead 11 may be attached to the electrode assembly 12 by being connected to the negative electrode tab and the positive electrode tab. The electrode lead 11 may be accommodated in the case 13 so that a portion thereof is exposed to the outside of the case 13.

The electrode lead 11 connected to the negative electrode tab becomes a negative electrode lead, and the electrode lead 11 connected to the positive electrode tab becomes a positive electrode lead. These electrode leads 11 may extend in the same direction or in opposite directions. In this embodiment, the electrode leads 11 are disposed in the same direction with respect to the longitudinal direction (X direction) of the battery, and extend along the longitudinal direction of the battery. In addition, they are located side by side along the width direction (Y direction) of the battery.

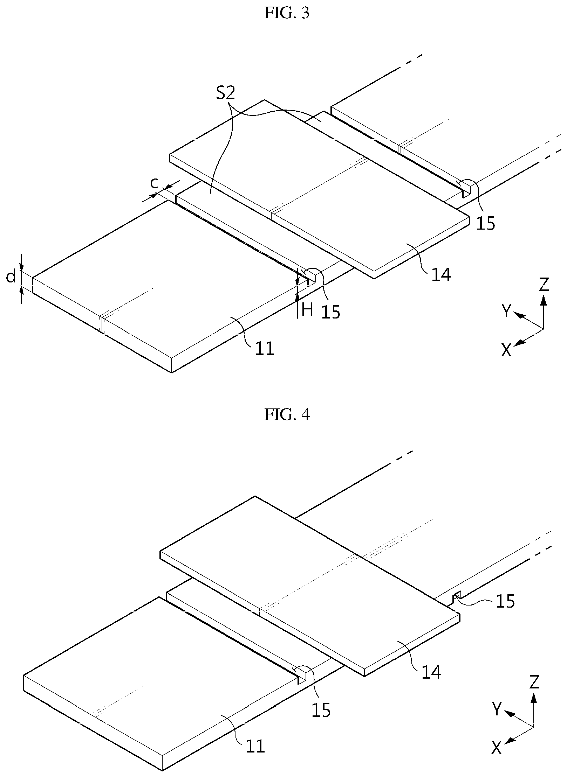

The electrode lead 11 may be a rectangular member in which a length L along the longitudinal direction of the battery is greater than a width W along the width direction of the battery. The electrode lead 11 extends along the longitudinal direction. The electrode lead 11 may be a sheet-like member having a thickness (Z direction, see d in FIG. 3) that is smaller than the width W and the length L. Finally, the electrode lead 11 is electrically connected to an external terminal.

The positive electrode lead and the negative electrode lead may be made of different materials. That is, the positive electrode lead may be made of the same aluminum material as the positive electrode plate, and the negative lead may be made of the same copper material or nickel-coated copper material as the negative electrode plate.

The lead film 14 covers a portion of the outer surface of the electrode lead 11 and is interposed between the electrode lead 11 and the sealing portion 13b of the protruding portion of the electrode lead 11. The lead film 14 is interposed between the electrode lead 11 and the sealing portion 13b of the protruding portion of the electrode lead to help bind the electrode lead 11 and the sealing portion 13b. The lead film 14 may be bonded to the case 13 through thermal fusion.

The lead film 14 not only prevents a short circuit from occurring between the electrode lead 11 and the metal layer of the case 13, for example, an aluminum sheet, but also serves to prevent leakage of an electrolyte or the like by improving the sealing force of the case 13.

In an embodiment of the present disclosure, the lead film 14 may include polyimide (PI), polypropylene, polyethylene, polyethylene terephthalate, or two or more of these. In particular, when the lead film 14 includes polyethylene, polyethylene has a low melting point and thus may be quickly melted at a high temperature. The melting point of polypropylene is about 160°C and the melting point of polyethylene is about 120-130°C. Accordingly, it may be easier for the electrode lead 11 having the separation groove 15 to be described later to be broken.

When a swelling phenomenon occurs due to overcharging or the like in the related art, a short circuit may occur locally as the battery is deformed, and there is a problem that the battery may be ignited or explode in an extreme situation.

The inventors of the present disclosure found that such a risk may be greatly reduced by breaking the electrode lead itself to block the path for receiving current from the outside, and thus completed the present disclosure. The electrode lead 11 is designed to be broken when high temperature and high pressure are applied to the secondary battery 10. To this end, a separation groove 15 is formed in the electrode lead 11 to make a portion of the electrode lead 11 cut in advance. Through this, when the temperature of the secondary battery 10 is runaway or the internal pressure of the secondary battery 10 increases, the electrode lead 11 may be cut off at the separation groove 15 portion.

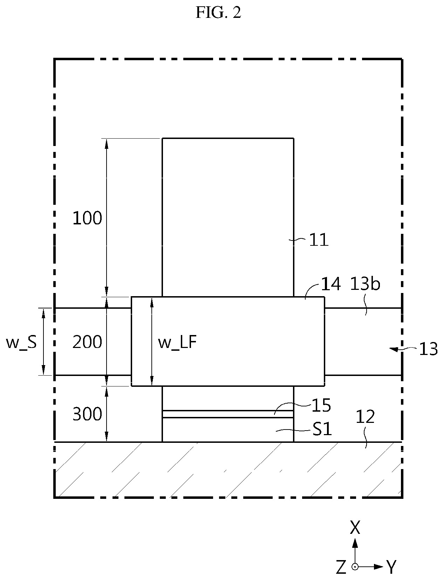

FIG. 2 is an enlarged plan view showing an electrode lead in a secondary battery according to an embodiment of the present disclosure.

Referring to FIG. 2, the electrode lead 11 includes a first region 100 not corresponding to the lead film 14 and exposed to the outside of the case 13, a second region 200 corresponding to the lead film 14, and a third region 300 not corresponding to the lead film 14 and not exposed to the outside of the case 13. The third region 300, the second region 200, and the first region 100 are placed in the longitudinal direction of the electrode lead 11, that is, along the extension direction of the electrode lead 11 in order from the portion closest to the electrode assembly 12 to the farthest portion.

In an embodiment of the present disclosure, the third region 300 may not correspond to the lead film 14, may not correspond to the sealing portion 13b of the case 13, and may be a region not exposed to the outside of the case 13. For example, a region where the width w_LF of the lead film 14 is wider than the width w_S of the sealing portion 13b, and which does not correspond to the lead film 14, does not correspond to the sealing portion 13b of the case 13 and is not exposed to the outside of the case 13 may be the third region 300. Here, the width w_LF of the lead film 14 means the maximum value of the distance between one end and the other end of the lead film 14 in the extension direction of the electrode lead 11. The width w_S of the sealing portion 13b means the maximum value of the distance between one end and the other end of the sealing portion 13b in the extension direction of the electrode lead 11.

Referring to FIG. 2, a separation groove 15 is located in the third region 300. The separation groove 15 serves to cause breakage as an external force is concentrated at the interface where the separation groove 15 is formed when the external force such as deformation of the case 13 is applied. That is, when the temperature of the cell is runaway, the electrode lead 11 may be more easily ruptured and separated by the force applied while the case 13 swells, thereby blocking further current flow and preventing getting into an extreme situation, resulting in safety enhancement.

The separation groove 15 is formed along the width direction of the electrode lead 11. The separation groove 15 is formed in a straight line along a direction orthogonal to the extension direction of the electrode lead 11. The separation groove 15 may be formed to be connected from one end to the other end of the electrode lead 11 along a direction orthogonal to the extension direction of the electrode lead 11. The separation groove 15 is a region in which a portion of the thickness of the electrode lead 11 is reduced along the width direction of the electrode lead 11. For example, the separation groove 15 may be a trench recessed by a predetermined depth (refer to H in FIG. 3) in a thickness direction from the surface of the electrode lead 11. Therefore, when the electrode lead 11 is broken in the separation groove 15, the current path to the electrode assembly 12 is completely blocked.

In the secondary battery according to an embodiment of the present disclosure, when a swelling phenomenon occurs, the electrode lead 11 may be completely separated from the electrode assembly 12, unlike conventional cases in which only a portion of the electrode tab is ruptured. As the electrode lead 11 is completely separated from the electrode assembly 12, current may be completely blocked.

On the other hand, since the lead film 14 serves to bind the electrode lead 11 and the sealing portion 13b of the case 13, it is difficult for the electrode lead 11 to be rapidly broken when the separation groove 15 is located at a portion in which the lead film 14 and the electrode lead 11 contact each other.

Also, since the electrode lead 11 and the sealing portion 13b form a binding force at the portion where the electrode lead 11 contacts the sealing portion 13b, it is difficult for the electrode lead 11 to be rapidly broken when the separation groove 15 is located at the portion where the electrode lead 11 contacts the sealing portion 13b.

Accordingly, when the separation groove 15 is located at a region where the lead film 14 and the electrode lead 11 do not correspond to each other and the electrode lead 11 is not exposed to the outside, for example, the third region 300 corresponding to the inner side of the battery than the sealing portion 13b, the electrode lead 11 may be rapidly broken.

In addition, when the separation groove 15 is located in the third region 300, the area S1 between the separation groove 15 and the lower end of the electrode lead 11 where the electrode lead 11 is connected to the electrode assembly 12 is narrow. Accordingly, a stronger magnitude of stress may be concentrated in the separation groove 15, and thus it may be easy for the electrode lead 11 to be rapidly broken.

By placing the separation groove 15 on the electrode lead 11 as described above, when the electrode lead 11 is broken at the separation groove 15, the electrical connection structure is forcibly released, thereby helping enhance the battery safety.

FIG. 3 is an enlarged plan view showing an electrode lead in a secondary battery according to another embodiment of the present disclosure.

Referring to FIG. 3, in accordance with the independent claim 1, a separation groove 15 is additionally located in the first region 100. The first region 100 is a region where the electrode lead 11 does not correspond to the lead film 14, does not correspond to the sealing portion 13b, and is exposed to the outside of the case 13. When the separation groove 15 is located in the first region 100 in addition to the third region 300, stress may be more concentrated in the narrow area portion S2 between the separation groove 15 located in the first region 100 and the separation groove 15 located in the third region 300 as compared to the case where the separation groove 15 is located only in the third region 300, and thus the electrode lead 11 may be broken more rapidly as compared to the case where the separation groove 15 is located only in the third region 300.

In an embodiment of the present disclosure, the separation groove 15 located in the third region 300 and the separation groove 15 located in the first region 100 may be located on the same side of the electrode lead 11, respectively.

Here, "the same side of the electrode lead" refers to the surface of the electrode lead corresponding to the same side when based on the surface of the electrode lead 11 in contact with the case 13. For example, the separation groove 15 located in the third region 300 and the separation groove 15 located in the first region 100 may be located on the upper surface of the electrode lead 11. Here, the upper surface may be referred to as a surface placed closer to the case 13 along the thickness direction.

FIG. 4 is an enlarged perspective view showing an electrode lead in a secondary battery according to still another embodiment of the present disclosure.

Referring to FIG. 4, the separation groove 15 located in the third region 300 and the separation groove 15 located in the first region 100 may be located on opposite surfaces of the electrode lead 11, respectively. For example, the separation groove 15 located in the third region 300 may be located on the lower surface of the electrode lead 11, and the separation groove 15 located in the first region 100 may be located on the upper surface of the electrode lead 11. Here, the upper surface may be referred to as a surface placed closer to the case 13 along the thickness direction, and the lower surface may be referred to as a surface located on the opposite side. When the separation groove 15 located in the third region 300 and the separation groove 15 located in the first region 100 are located on opposite surfaces of the electrode lead 11, respectively, it is not easy for the maximum stress applied near one separation groove 15 to be distributed to the other separation groove 15, and thus a stronger magnitude of stress may be applied to the separation groove 15, whereby the electrode lead 11 may be more easily broken rapidly.

Here, "opposite side of the electrode lead" refers to the surface of the electrode lead corresponding to the side that corresponds to the direction opposite to each other when based on the surface of the electrode lead 11 in contact with the case 13.

The separation groove 15 may have a shape suitable for separation so that physical and electrical blocking may be surely performed.

For example, as shown in FIGS. 2 to 4, the separation groove 15 may be formed in a band shape crossing the width of the electrode lead 11. When the separation groove 15 is formed in a band shape crossing the width of the electrode lead 11, the maximum stress is evenly applied along the band shape, and thus it may be easier for the electrode lead 11 to be rapidly broken. In addition, the cutting area of the electrode lead 11 is wide, so that the electrode lead 11 may be more easily broken rapidly.

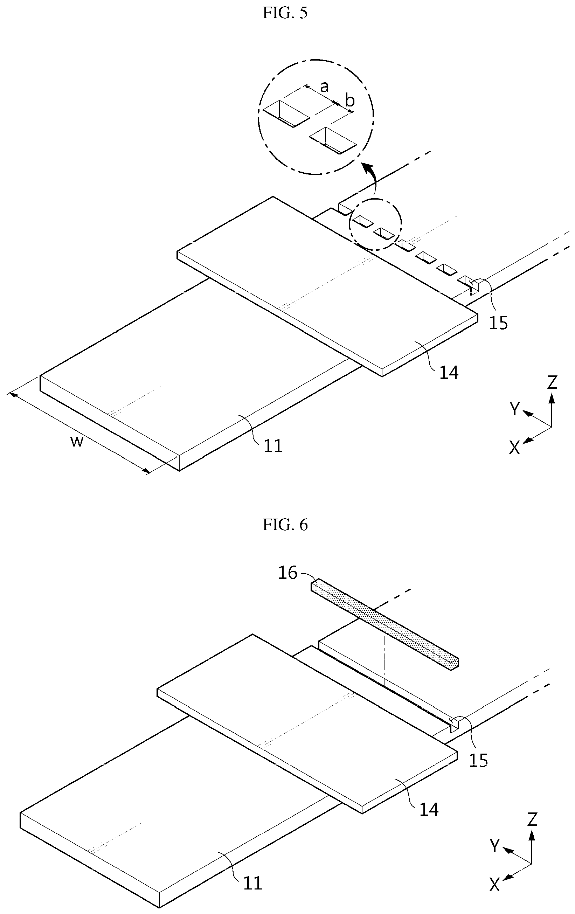

Alternatively, as shown in FIG. 5, the separation groove 15 may have a shape of a dotted line. Here, having a shape of a dotted line may mean that the separation groove 15 is formed not to be connected from one end to the other end of the electrode lead 11 but is divided into several portions, and there is no continuity between the separation grooves 15 through a portion where the intermediate separation groove 15 is not formed. When the separation groove 15 has a shape of a dotted line, the electrode lead 11 may have more rigidity at an internal pressure under a normal operating condition of the battery, and the electrode lead 11 may be easily broken quickly during abnormal operation of the battery. Also, it may be used as a pressure sensing method for determining whether the battery is normal.

Referring to FIG. 5, when the separation groove 15 has a shape of a dotted line, the width a of the dotted line may be 5 to 50% of the width w of the electrode lead 11. When the width a of the dotted line satisfies the above-defined range, the electrode lead 11 may be easily broken rapidly while having rigidity at a higher internal pressure.

Also, referring to FIG. 5, when the separation groove 15 has a shape of a dotted line, the length b between the dots of the dotted line may be 5 to 50% of the width w of the electrode lead 11. When the length b between the dots of the dotted line satisfies the above-defined range, the electrode lead 11 may be easily broken rapidly while having rigidity at a higher internal pressure.

In an embodiment of the present disclosure, when the separation groove 15 has a shape of a dotted line, the ratio of the width a of the dotted line to the length b between adjacent dots of the dotted line may be 5:1 to 1:5. When the ratio of the width a of the dotted line to the length b between the dots of the dotted line may satisfies the above-defined range, the electrode lead 11 may be easily broken rapidly while having rigidity at a higher internal pressure.

FIG. 6 is an enlarged exploded perspective view showing an electrode lead in a secondary battery according to still another embodiment of the present disclosure.

Referring to FIG. 6, a cross section of the separation groove 15 along the extension direction of the electrode lead 11 may have a square shape. The cross section of the separation groove 15 may have a wedge shape or a round shape, but the cross-sectional shape of the separation groove 15 is not particularly limited as long as the electrode lead 11 may be rapidly broken.

Referring to FIG. 6, the separation groove 15 may be filled with an insulating film 16. Since the separation groove 15 is filled with the insulating film 16, smoothness of the surface of the electrode lead 11 may be maintained. When the separation groove 15 is filled with the insulating film 16, inflow of foreign substances may be prevented, and the electrode lead 11 may have rigidity at a higher internal pressure under a normal operating condition of the battery. In addition, the case 13 may be protected from damage to the surface of the electrode lead 11 that may occur when the separation groove 15 is formed. Also, since the separation groove 15 is located inside the case 13, the electrode lead 11 may be protected when exposed to an electrolyte.

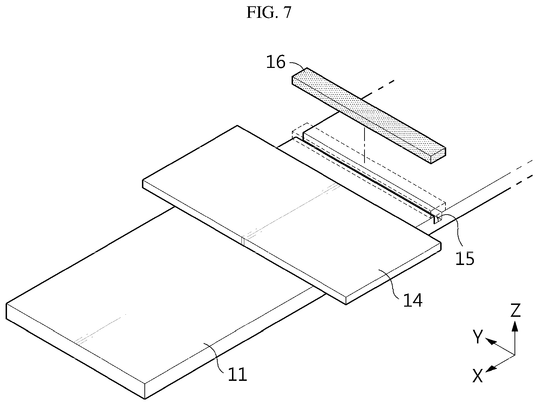

FIG. 7 is an enlarged exploded perspective view showing an electrode lead in a secondary battery according to another embodiment of the present disclosure.

Referring to FIG. 7, the separation groove 15 may be covered with an insulating film 16. When the separation groove 15 is covered with the insulating film 16, the insulating film 16 may partially cover the surface of the electrode lead 11 on both sides of the separation groove 15. When the separation groove 15 is covered with the insulating film 16, inflow of foreign substances may be prevented, and the electrode lead 11 may have rigidity at a higher internal pressure under a normal operating condition of the battery. In addition, the case 13 may be protected from damage to the surface of the electrode lead 11 that may occur when the separation groove 15 is formed. Also, since the separation groove 15 is located inside the case 13, the electrode lead 11 may be protected when exposed to an electrolyte.

Referring to FIG. 7, when the separation groove 15 is covered with an insulating film 16, the insulating film 16 does not fill the inside of the separation groove 15, and thus an empty space may exist inside the separation groove 15. Since the separation groove 15 is not filled, the effect of stress concentration is excellent, and breakage may occur rapidly in the separation groove 15 portion.

In an embodiment of the present disclosure, the insulating film 16 may include polypropylene, polyethylene, polyimide, or two or more of these. In particular, when the insulating film 16 is polypropylene, polyethylene, or the like, the insulating film 16 has a low melting point and thus may be quickly melted at a high temperature. Accordingly, when the internal pressure of the battery increases, the electrode lead may be more easily broken rapidly.

A method of forming the separation groove 15 includes, for example, a method of using a roll having a cutter on its surface or a method of using a frame equipped with a cutter, but is not limited thereto. When the electrode lead 11 is formed by a mold manufacturing method, the separation groove 15 may be included from the beginning.

When the separation groove 15 is formed, a current path is secured, and the depth H of the separation groove 15 may be adjusted in consideration of the degree to which breakage may occur rapidly when the internal pressure of the battery rises.

In an embodiment of the present disclosure, for example, the separation groove 15 of FIG. 3 may be formed to have a depth H of 30% or more compared to the thickness d of the electrode lead 11. For example, when the thickness d of the electrode lead 11 is 0.4 mm, the depth H of the separation groove 15 may be 0.3 mm.

When the separation groove 15 is formed, a current path is secured, and the width c of the separation groove 15 may be adjusted in consideration of the degree to which breakage may occur rapidly when the internal pressure of the battery rises. For example, the width c of the separation groove 15 may be 0.5 mm.

In this way, by adjusting the shape, size, number and position of the separation grooves 15, the electrode lead 11 may be short-circuited at a desired internal pressure, and the short-circuited internal pressure may be controlled. For example, if the shape of the separation groove 15 is designed to have a shape in which stress is concentrated, it may lead to more rapid breakage. If the depth H of the separation groove 15 is increased, the separation groove 15 may be broken even at a lower internal pressure. This may also be used as a pressure sensing method when checking whether the cell is normal or not, and may also enable cell inspection.

The separation groove 15 may be formed on at least one of the positive electrode lead and the negative electrode lead.

The separation groove 15 may be formed on any one of one surface and the other surface of the electrode lead 11 in contact with the case 13, or may be formed on both one surface and the other surface of the electrode lead 11.

In an embodiment of the present disclosure, the secondary battery may be a cylindrical, prismatic, or pouch-type secondary battery. Among them, the secondary battery may be a pouch-type secondary battery. A pouch-type secondary battery is easy to increase the volume ratio, but has a disadvantage in that the pouch itself is difficult to hold the cell. When the temperature of the cell is runaway, a pouch-type secondary battery has no thermal stability unlike a cylindrical battery with PTC or CID. According to the present disclosure, there is an advantage in that a safety device is provided even in a pouch-type secondary battery by including a separation groove in the electrode lead and forcibly releasing the electrical connection by allowing the electrode lead to be broken at the separation groove portion.

When a secondary battery explodes, swelling usually occurs first. Also, since the secondary battery has a high risk of fire due to a tremendous temperature rise in operation, it is necessary to prepare for this. According to the present disclosure, it is possible to prepare for the risk of fire by including a separation groove in the electrode lead and allowing the electrode lead to be broken at the separation groove portion when the temperature of the secondary battery is runaway.

Hereinafter, the present disclosure will be described in detail with reference to examples so that the present disclosure may be understood with ease. However, the following examples may be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art. As in the present disclosure, the stress applied to the electrode lead was analyzed through simulation experiments for the case where the separation groove was designed and the case where it was not. For easy analysis, the analysis proceeded on the assumption that the length of the battery was short. Examples and comparative examples were prepared according to the following conditions.

### Example 1

An electrode assembly stacked in the order of positive electrode/separator/negative electrode was interposed between two laminate sheets composed of poly(ethylene terephthalate)/aluminum/polypropylene so that the electrode lead was exposed to the outside, and then polypropylene was used as a lead film and interposed between the electrode lead and the case. At this time, the width of the lead film was wider than the width of the sealing portion.

A scenario in which a separation groove is formed by cutting a region of one side of the electrode lead that does not correspond to the sealing portion of the case without corresponding to the lead film and is not exposed to the outside of the case in a band shape crossing the width of the electrode lead was assumed. The thickness of the electrode lead was 0.4 mm, the depth of the separation groove was 0.3 mm, and the width of the separation groove was 0.5 mm. For example, this is the scenario where the separation groove is located in the third region as shown in FIG. 2.

### Example 2

The same condition as in Example 1 was set, except that a separation groove is additionally formed by further cutting a region of one side of the electrode lead that is exposed to the outside of the case and does not correspond to both the lead film and the sealing portion of the case in a band shape crossing the width of the electrode lead. For example, this is the scenario where the separation grooves are located in the first region and the third region as shown in FIG. 3.

### Example 3

The same condition as in Example 1 was set, except that a separation groove is formed by cutting a region of one side of the electrode lead that is exposed to the outside of the case and does not correspond to both the lead film and the sealing portion of the case in a band shape crossing the width of the electrode lead, and a separation groove is formed by cutting a region of the other side of the cut electrode lead that does not correspond to both the lead film and the sealing portion of the case and is not exposed to the outside of the case and in a band shape crossing the width of the electrode lead. For example, this is the scenario where the separation grooves are located in the first region and the third region, but are located on opposite surfaces of each other as shown in FIG. 4.

### Example 4

The same condition as in Example 1 was set, except that the polyethylene film was filled in the separation groove cut in Example 1. For example, it is the same as the embodiment shown in FIG. 6.

### Example 5

The same condition as in Example 1 was set, except that the periphery of the separation groove cut in Example 1 was covered with the polyethylene film. For example, it is the same as the embodiment shown in FIG. 7.

### Comparative Example 1

The same condition as in Example 1 was set, except that a separation groove is formed by cutting a region of one side of the electrode lead that is exposed to the outside of the case and does not correspond to both the lead film and the sealing portion of the case in a band shape crossing the width of the electrode lead. For example, this is the scenario where the separation groove is located only in the first region.

### Comparative Example 2

The same condition as in Example 1 was set, except that a separation groove is formed by cutting a region of one side of the electrode lead that is exposed to the outside of the case and corresponds to the lead film, but does not correspond to the sealing portion of the case in a band shape crossing the width of the electrode lead. For example, this is the scenario where the separation groove is located at a portion just below the lead film located outside the case outside the sealing portion in the second region.

### Comparative Example 3

The same condition as in Example 1 was set, except that a separation groove is formed by cutting a region of one side of the electrode lead that corresponds to the lead film and the sealing portion of the case in a band shape crossing the width of the electrode lead. For example, this is the case scenario the separation groove is located in the middle of the second region and is buried in the lead film.

### Comparative Example 4

The same condition as in Example 1 was set, except that a separation groove is formed by cutting a region of one side of the electrode lead inside the battery that corresponds to the lead film but does not correspond to the sealing portion of the case without being exposed to the outside of the case in a band shape crossing the width of the electrode lead. For example, this is the scenario where the separation groove is located at a portion just below the lead film located inside the case inside the sealing portion in the second region.

### Test Example: Measurement of Stress on Electrode Lead

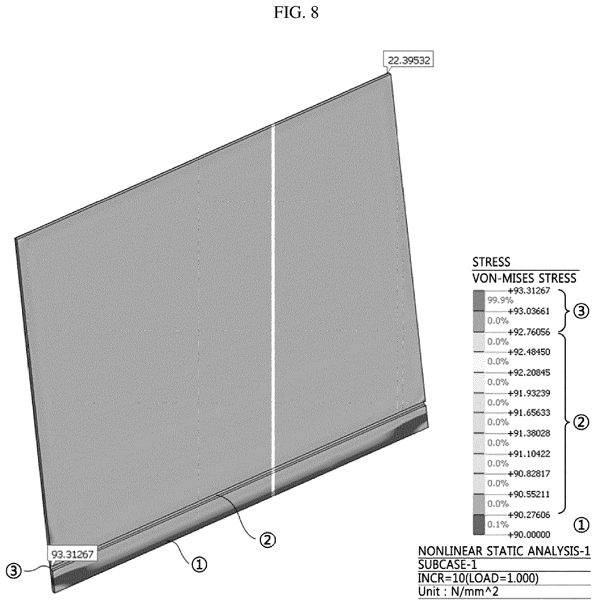

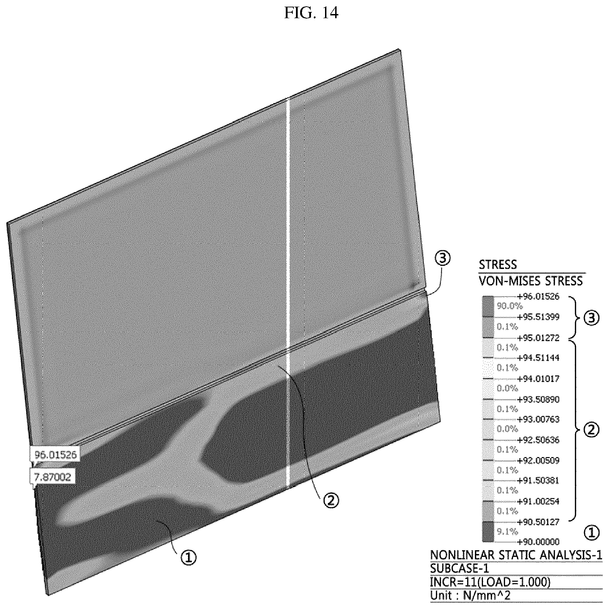

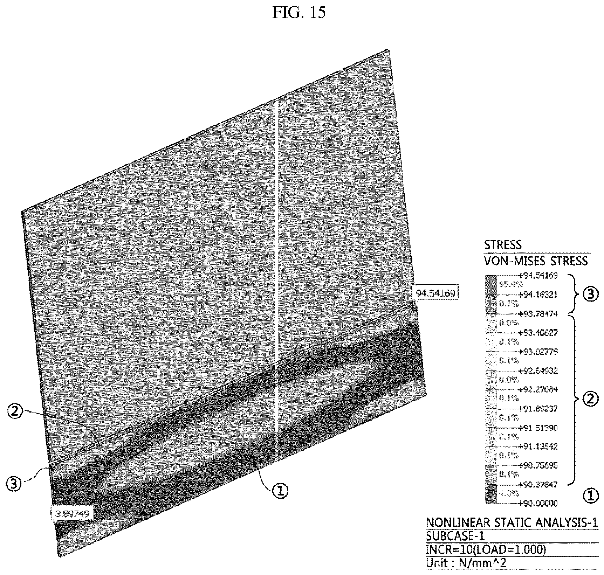

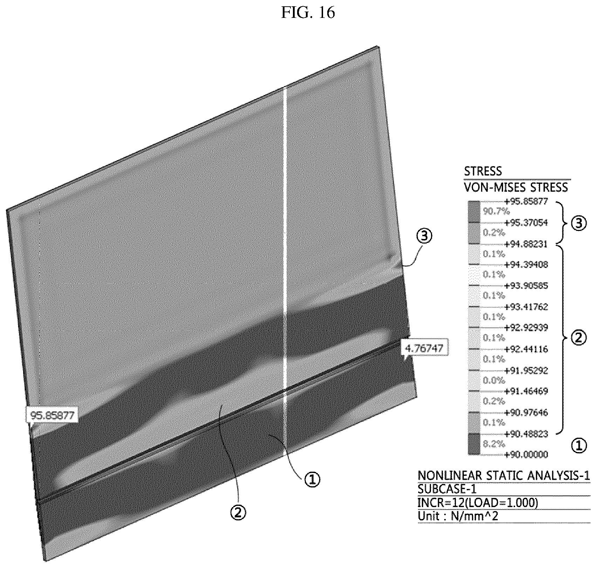

It was assumed that a pressure of 0.1 MPa acts on the inside of the case in the secondary batteries according to Examples 1 to 5 and Comparative Examples 1 to 4, and when a temperature of 180°C was applied, the stress applied to the electrode lead was measured by simulation experiments, which was shown in FIGS. 8 to 16, respectively. At this time, the lower end of the electrode case was fixed. The electrode lead was assumed to be made of aluminum, and the plastic deformation stress strain curve data was used for the electrode lead and pouch. When a stress of 87 MPa or more is applied, plastic deformation occurs in the electrode lead. The lead film was proceeded with polypropylene. The analysis boundary condition was performed on the assumption that the electrode leads are welded to the bus bar.

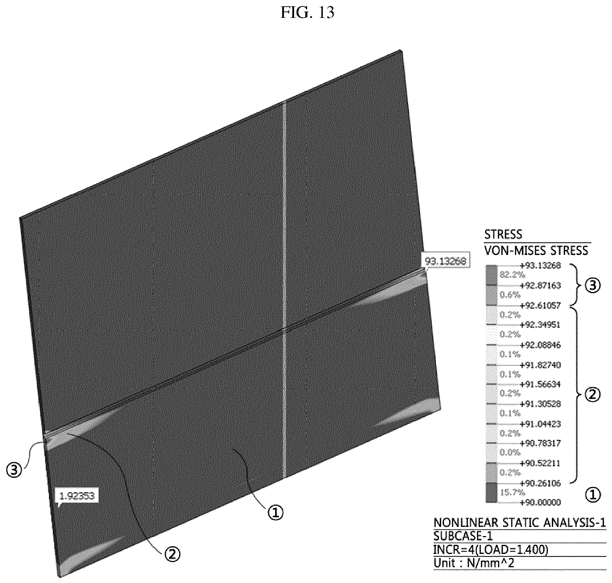

FIGS. 8 to 12 are diagrams showing stress analysis results when internal pressure is applied to an electrode lead portion of a secondary battery according to Examples. FIGS. 13 to 16 are diagrams showing stress analysis results when internal pressure is applied to an electrode lead portion of a secondary battery according to Comparative Examples. In FIGS. 8 to 16, the index for estimating the stress is shown together at the lower right side, and the stress is greater as the index goes from bottom to top (from blue to red in the case of color drawings), (for convenience of reference in the case of black and white drawings), the part with relatively small stress was written as ①, the part with relatively medium stress was written as ②, and the part with relatively large stress was written as ③.

Referring to FIGS. 8 to 12, it can be seen that the secondary batteries according to Examples 1 to 5 have the largest maximum stress in the separation groove portion, and the maximum stress acts evenly on the entire separation groove. Accordingly, in the case of the secondary battery according to Examples 1 to 5, it can be inferred that the electrode lead may be rapidly broken when the internal pressure of the battery increases.

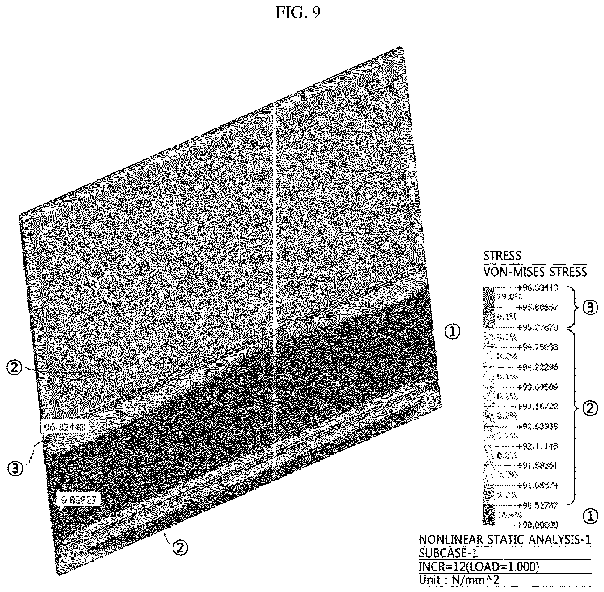

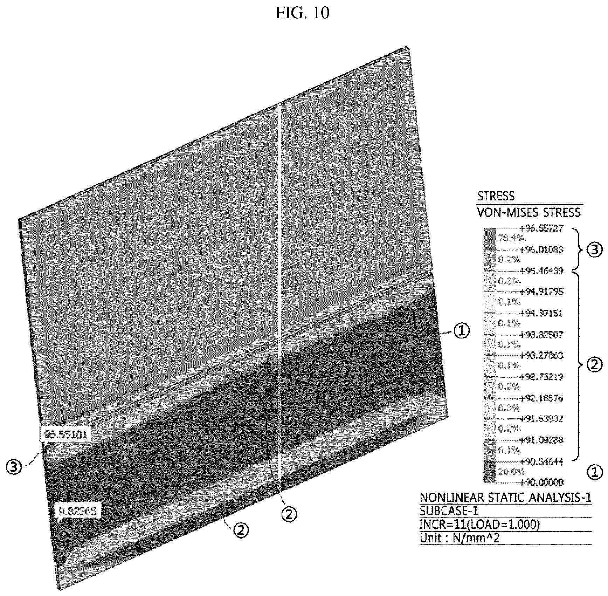

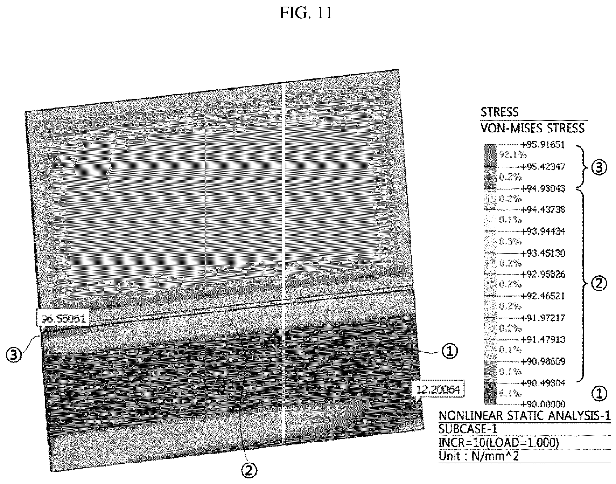

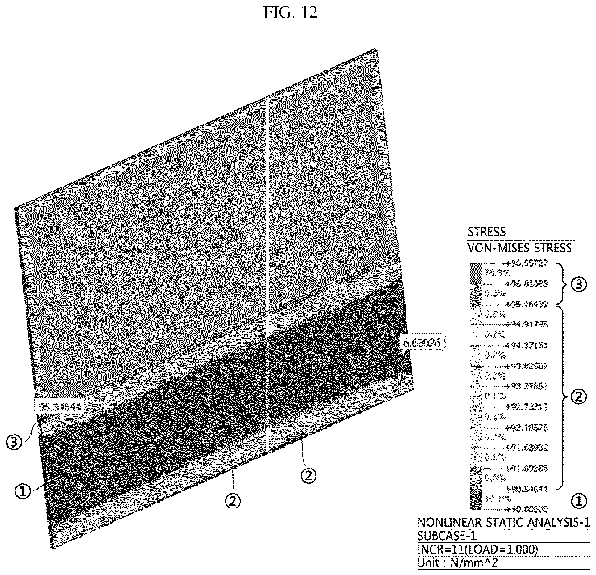

In particular, it can be seen that the secondary battery according to Example 3 of FIG. 10 has the largest maximum stress in the separation groove portion compared to the secondary batteries according to Example 1 of FIG. 8, Example 2 of FIG. 9, Example 4 of FIG. 11, and Example 5 of FIG. 12. Accordingly, in the case of the secondary battery according to Example 3, it can be inferred that the electrode lead may be most rapidly broken when the internal pressure of the battery increases.

Specifically, the maximum stress of Example 1 is 93.31267 MPa, and the maximum stress of Example 2 is 96.33443 MPa. In the case of Example 2, it can be said that the maximum stress distribution is more suitable for short-circuiting against high pressure in two portions of the separation groove. In addition, Example 1 and Example 2 have the advantage of being easy to break the electrode lead because the position of the separation groove does not overlap with the lead film and also does not overlap with the sealing portion.

In Example 2, the separation groove formed in the third region has a greater maximum stress than the separation groove formed in the first region. In the separation groove formed in the third region, the extra region below the cut portion (see S1 in FIG. 2) is narrow, and in the separation groove formed in the first region, the electrode lead region is wide on both sides of the upper and lower regions. Therefore, the separation groove formed in the third region has a larger maximum stress than the separation groove formed in the first region, and the high stress range is clearly shown around the separation groove.

The maximum stress of Example 3 was 96.55101 MPa, which was slightly higher than that of Example 2. This is because when the two separation grooves are formed on different sides of the electrode lead, the lead-side support is misaligned, and thus stress is difficult to rise along the longitudinal direction of the electrode lead, thereby increasing stress.

The maximum stress of Example 4 was simulated as 96.55061 MPa, and the maximum stress of Example 5 was simulated as 96.34644 MPa. When the separation groove is covered with an insulating film as in Example 5, the maximum stress is slightly reduced compared to Example 3. However, it is higher than that of Example 2. Also, when the separation groove is filled with an insulating film as in Example 4, the maximum stress is shown as a value between Example 5 and Example 3. In this way, it is possible to determine the location and number of separation grooves and whether to add an insulating film so that the desired maximum stress is properly generated as in Examples 1 to 5.

Next, referring to FIGS. 13 to 16, the secondary batteries according to Comparative Examples 1 to 4 have maximum stresses of 93.13268 MPa, 96.01526 MPa, 94.54169 MPa, and 95.85877 MPa, respectively, and it is confirmed that all of them may cause plastic deformation in the electrode leads. However, when looking at the stress distribution of the separation groove, it can be seen that the maximum stress does not act evenly across the entire separation groove, unlike the secondary batteries according to Examples 1 to 5. Accordingly, in the case of the secondary batteries according to Comparative Examples 1 to 4, it can be inferred that it is somewhat difficult for the electrode lead to be rapidly broken when the internal pressure of the battery increases.

While the present disclosure has been hereinabove described with regard to a limited number of embodiments and drawings, the invention is defined by the scope of the appended claims.

### [Reference Signs]

10: secondary battery
11: electrode lead
12: electrode assembly
13: battery case
13a: accommodating portion
13b: sealing portion
14: lead film
15: separation groove
16: insulating film
100: first region
200: second region
300: third region

## Claims

1. A secondary battery (10) comprising:
an electrode assembly (12) to which an electrode lead (11) is attached;
a case (13) accommodating the electrode assembly (12) therein so that a portion of the electrode lead (11) is exposed to the outside;
a sealing portion (13b) formed in the case (13) to seal the electrode assembly (12); and
a lead film (14) covering a portion of an outer surface of the electrode lead (11) and interposed between the electrode lead (11) and the sealing portion (13b),
wherein the electrode lead (11) comprises a first region (100) not corresponding to the lead film (14) and exposed to the outside of the case (13), a second region (200) corresponding to the lead film (14), and a third region (300) not corresponding to the lead film (14) and not exposed to the outside of the case (13),
wherein a separation groove (15) is located in the third region (300),
**characterized in that** a separation groove (15) is additionally located in the first region (100).

2. The secondary battery (10) according to claim 1,
wherein the separation groove (15) located in the third region (300) and the separation groove (15) located in the first region (100) are respectively located on opposite surfaces of the electrode lead (11).

3. The secondary battery (10) according to claim 1,
wherein the separation groove (15) is formed in a band shape crossing the width of the electrode lead (11).

4. The secondary battery (10) according to claim 1,
wherein the separation groove (15) has a shape of a dotted line.

5. The secondary battery (10) according to claim 4,
wherein the width of the dotted line is 5 to 50% of the width of the electrode lead (11).

6. The secondary battery (10) according to claim 4,
wherein the length between adjacent dots of the dotted line is 5 to 50% of the width of the electrode lead (11).

7. The secondary battery (10) according to claim 4,
wherein the ratio of the width of the dotted line to the length between adjacent dots of the dotted line is 5:1 to 1:5.

8. The secondary battery (10) according to claim 1,
wherein the separation groove (15) is filled with an insulating film.

9. The secondary battery (10) according to claim 1,
wherein the separation groove (15) is covered with an insulating film.

10. The secondary battery (10) according to claim 9,
wherein the separation groove (15) defines an empty space therein.

11. The secondary battery (10) according to claims 8 or 9,
wherein the insulating film comprises polypropylene, polyethylene, polyimide, or two or more of these.

12. The secondary battery (10) according to claim 1,
wherein the lead film (14) comprises polyethylene.

13. The secondary battery (10) according to claim 1,
wherein the separation groove (15) is formed to be connected from one end to the other end of the electrode lead (11) along a direction orthogonal to the extension direction of the electrode lead (11).

14. The secondary battery (10) according to claim 1,
wherein the separation groove (15) is a region in which a portion of the thickness of the electrode lead (11) is reduced along the width direction of the electrode lead (11).

## Patentansprüche

1. Sekundärbatterie (10), umfassend:
eine Elektrodenanordnung (12), an welcher eine Elektrodenleitung (11) angebracht ist;
ein Gehäuse (13), welches die Elektrodenanordnung (12) darin aufnimmt, so dass ein Abschnitt der Elektrodenleitung (11) zu dem Äußeren freigelegt ist;
einen Dichtungsabschnitt (13b), welcher in dem Gehäuse (13) gebildet ist, um die Elektrodenanordnung (12) abzudichten; und
einen Leitungsfilm (14), welcher einen Abschnitt einer äußeren Fläche der Elektrodenleitung (11) bedeckt und zwischen der Elektrodenleitung (11) und dem Dichtungsabschnitt (13b) eingefügt ist,
wobei die Elektrodenleitung (11) einen ersten Bereich (100), welcher nicht dem Leitungsfilm (14) entspricht und zu dem Äußeren des Gehäuses (13) freigelegt ist, einen zweiten Bereich (200), welcher dem Leitungsfilm (14) entspricht, und einen dritten Bereich (300) umfasst, welcher nicht dem Leitungsfilm (14) entspricht und nicht zu dem Äußeren des Gehäuses (13) freigelegt ist,
wobei sich eine Trennungsnut (15) in dem dritten Bereich (300) befindet,
**dadurch gekennzeichnet, dass** sich die Trennungsnut (15) zusätzlich in dem ersten Bereich (100) befindet.

2. Sekundärbatterie (10) nach Anspruch 1,
wobei sich die Trennungsnut (15), welche sich in dem dritten Bereich (300) befindet, und die Trennungsnut (15), welche sich in dem ersten Bereich (100) befindet, jeweils an entgegengesetzten Flächen der Elektrodenleitung (11) befinden.

3. Sekundärbatterie (10) nach Anspruch 1,
wobei die Trennungsnut (15) in einer Streifenform gebildet ist, welche die Breite der Elektrodenleitung (11) kreuzt.

4. Sekundärbatterie (10) nach Anspruch 1,
wobei die Trennungsnut (15) eine Form einer gepunkteten Linie aufweist.

5. Sekundärbatterie (10) nach Anspruch 4,
wobei die Breite der gepunkteten Linie 5 bis 50 % der Breite der Elektrodenleitung (11) ist.

6. Sekundärbatterie (10) nach Anspruch 4,
wobei die Länge zwischen benachbarten Punkten der gepunkteten Linie 5 bis 50 % der Breite der Elektrodenleitung (11) ist.

7. Sekundärbatterie (10) nach Anspruch 4,
wobei das Verhältnis der Breite der gepunkteten Linie zu der Länge zwischen benachbarten Punkten der gepunkteten Linie 5:1 bis 1:5 ist.

8. Sekundärbatterie (10) nach Anspruch 1,
wobei die Trennungsnut (15) mit einem isolierenden Film gefüllt ist.

9. Sekundärbatterie (10) nach Anspruch 1,
wobei die Trennungsnut (15) mit einem isolierenden Film bedeckt ist.

10. Sekundärbatterie (10) nach Anspruch 9,
wobei die Trennungsnut (15) darin einen freien Raum definiert.

11. Sekundärbatterie (10) nach Anspruch 8 oder 9,
wobei der isolierende Film Polypropylen, Polyethylen, Polyimid oder zwei oder mehr davon umfasst.

12. Sekundärbatterie (10) nach Anspruch 1,
wobei der Leitungsfilm (14) Polyethylen umfasst.

13. Sekundärbatterie (10) nach Anspruch 1,
wobei die Trennungsnut (15) derart gebildet ist, dass sie entlang einer Richtung, welche entlang einer Richtung, welche orthogonal zu der Erstreckungsrichtung der Elektrodenleitung (11) ist, von einem Ende zu dem anderen Ende der Elektrodenleitung (11) verbunden ist.

14. Sekundärbatterie (10) nach Anspruch 1,
wobei die Trennungsnut (15) ein Bereich ist, in welchem ein Abschnitt der Dicke der Elektrodenleitung (11) entlang der Breitenrichtung der Elektrodenleitung (11) reduziert ist.

## Revendications

1. Batterie secondaire (10) comprenant :
un ensemble électrode (12) auquel est fixé un fil d'électrode (11) ;
un boîtier (13) logeant l'ensemble électrode (12) en son sein de sorte qu'une partie du fil d'électrode (11) soit exposée à l'extérieur ;
une partie d'étanchéité (13b) formée dans le boîtier (13) pour sceller l'ensemble électrode (12) ; et
un film de fil (14) recouvrant une partie d'une surface externe du fil d'électrode (11) et interposé entre le fil d'électrode (11) et la partie d'étanchéité (13b),
dans laquelle le fil d'électrode (11) comprend une première région (100) qui ne correspond pas au film de fil (14) et qui est exposée à l'extérieur du boîtier (13), une deuxième région (200) correspondant au film de fil (14), et une troisième région (300) qui ne correspond pas au film de fil (14) et qui n'est pas exposée à l'extérieur du boîtier (13),
dans laquelle une rainure de séparation (15) est située dans la troisième région (300), **caractérisée en ce qu'**une rainure de séparation (15) est également située dans la première région (100).

2. Batterie secondaire (10) selon la revendication 1,
dans laquelle la rainure de séparation (15) située dans la troisième région (300) et la rainure de séparation (15) située dans la première région (100) sont respectivement situées sur des surfaces opposées du fil d'électrode (11).

3. Batterie secondaire (10) selon la revendication 1,
dans laquelle la rainure de séparation (15) est formée sous la forme d'une bande traversant la largeur du fil d'électrode (11).

4. Batterie secondaire (10) selon la revendication 1,
dans laquelle la rainure de séparation (15) présente une forme de ligne en pointillés.

5. Batterie secondaire (10) selon la revendication 4,
dans laquelle la largeur de la ligne en pointillés est de 5 à 50 % de la largeur du fil d'électrode (11).

6. Batterie secondaire (10) selon la revendication 4,
dans laquelle la longueur entre des points adjacents de la ligne en pointillés est de 5 à 50 % de la largeur du fil d'électrode (11).

7. Batterie secondaire (10) selon la revendication 4,
dans laquelle le rapport entre la largeur de la ligne en pointillés et la longueur entre des points adjacents de la ligne en pointillés est de 5:1 à 1:5.

8. Batterie secondaire (10) selon la revendication 1,
dans laquelle la rainure de séparation (15) est remplie d'un film isolant.

9. Batterie secondaire (10) selon la revendication 1,
dans laquelle la rainure de séparation (15) est recouverte d'un film isolant.

10. Batterie secondaire (10) selon la revendication 9,
dans laquelle la rainure de séparation (15) définit un espace vide dans celle-ci.

11. Batterie secondaire (10) selon la revendication 8 ou 9,
dans laquelle le film isolant comprend du polypropylène, du polyéthylène, du polyimide, ou deux ou plus de deux de ceux-ci.

12. Batterie secondaire (10) selon la revendication 1,
dans laquelle le film de fil (14) comprend du polyéthylène.

13. Batterie secondaire (10) selon la revendication 1,
dans laquelle la rainure de séparation (15) est formée pour être reliée d'une extrémité à l'autre extrémité du fil d'électrode (11) dans une direction orthogonale à la direction d'extension du fil d'électrode (11).

14. Batterie secondaire (10) selon la revendication 1,
dans laquelle la rainure de séparation (15) est une région dans laquelle une partie de l'épaisseur du fil d'électrode (11) est réduite dans la direction de la largeur du fil d'électrode (11).
